(19) Europäisches Patentamt / European Patent Office / Office européen des brevets

(11) **EP 3 601 169 B1**

(12) **FASCICULE DE BREVET EUROPEEN**

(45) Date de publication et mention de la délivrance du brevet:
**11.05.2022 Bulletin 2022/19**

(21) Numéro de dépôt: **18713973.8**

(22) Date de dépôt: **30.03.2018**

(51) Classification Internationale des Brevets (IPC):
*C02F 3/00* ^(2006.01)     *C02F 3/02* ^(2006.01)
*C02F 101/30* ^(2006.01)     *C02F 101/16* ^(2006.01)

(52) Classification Coopérative des Brevets (CPC):
**C02F 3/006; C02F 3/02;** C02F 2101/16;
C02F 2101/30; C02F 2209/001; C02F 2209/003;
C02F 2209/08; C02F 2209/14; C02F 2209/20;
C02F 2209/22; C02F 2209/40; Y02W 10/10

(86) Numéro de dépôt international:
**PCT/EP2018/058360**

(87) Numéro de publication internationale:
**WO 2018/178373 (04.10.2018 Gazette 2018/40)**

(54) **PROCÉDÉ ET DISPOSITIF DE TRAITEMENT D'EAU RÉSIDUAIRE**

VERFAHREN UND VORRICHTUNG ZUR BEHANDLUNG VON ABWASSER

PROCESS AND DEVICE FOR WASTEWATER TREATMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.03.2017 FR 1752662**

(43) Date de publication de la demande:
**05.02.2020 Bulletin 2020/06**

(73) Titulaire: **SUEZ Groupe
92040 Paris la Défense Cedex (FR)**

(72) Inventeurs:
• **MOZO, Irène
75001 Paris (FR)**
• **CALIGARIS, Marc
78510 Triel Sur Seine (FR)**

(74) Mandataire: **Marks & Clerk France
Immeuble "Visium"
22, avenue Aristide Briand
94117 Arcueil Cedex (FR)**

(56) Documents cités:
EP-B1- 0 925 258     FR-A1- 2 400 489
FR-A1- 2 955 856     US-A1- 2015 266 759

EP 3 601 169 B1

**Description**

**Contexte de l'invention**

L'invention concerne le domaine du traitement des eaux résiduaires ou effluents. L'invention est spécialement axée sur le traitement et la récupération de la pollution carbonée et azotée dans les eaux résiduaires. L'invention s'inscrit dans un traitement en deux étapes, une première étape consistant à traiter le carbone contenu dans l'eau au moyen d'oxygène et une seconde étape de traitement de l'azote contenu dans l'eau traitée à l'issue de la première étape.

Avec l'augmentation de la population mondiale la consommation en eau augmente. L'urbanisation croissante crée de nouveaux modes de production et de consommation humaine et il devient indispensable de traiter les eaux usées issues de la consommation domestique et industrielle avant de les renvoyer dans la nature, ceci dans un souci de préservation de l'environnement. Par ailleurs dans la plupart des pays la législation impose de tels traitements.

De façon classique, les stations de traitement d'eau résiduaire sont principalement conçues pour éliminer le carbone, l'azote et le phosphore au moyen de processus biologiques mettant en œuvre des bactéries spécifiques.

Par exemple, dans un système de boues activées, connu dans la littérature anglo-saxonne sous le nom de « activated sludge system » la matière organique contenue dans les eaux usées est éliminée lors d'un processus de bio-oxydation où la matière organique est un donneur d'électrons tandis que l'oxygène est un receveur d'électrons. Des bactéries sont responsables de la catalyse de la réaction. Un exemple de réaction de bio-oxydation peut s'exprimer ainsi :

$$C_{10}H_{19}NO_3 + 6,25\ O_2 + 0,25\ NH_4^+ + 0,25\ HCO_3^- \rightarrow 4CO_2 + 5,75\ H_2O + 1,25 C_5H_7NO_2 \qquad (\text{équation 1})$$

$C_{10}H_{19}NO_3$ représente la matière organique principalement présente dans les eaux résiduaires et que l'on souhaite éliminer ;
$C_5H_7NO_2$ représente la biomasse.

Pour une réaction donnée, une quantité suffisante d'oxygène doit être fournie pour traiter la matière organique. Par ailleurs, on cherche à réduire autant que possible la consommation d'énergie requise pour la production et l'alimentation en air apportant l'oxygène. Pour ce faire, on a tenté d'utiliser une mesure de la demande chimique en oxygène, souvent appelée DCO, dans l'effluent pour contrôler le débit d'air entrant dans le système de boues activées.

Ce système traite à la fois le carbone et en partie l'azote contenu dans les eaux résiduaires. Il est également connu d'y adjoindre un traitement de l'azote. Une première étape, parfois appelée étape A, consistant à traiter essentiellement la matière organique au moyen d'oxygène est suivie d'une seconde étape, parfois appelée étape B, consistant à traiter l'azote à l'issue de l'étape A.

Dans la première étape de traitement de la matière organique, on a toujours cherché à optimiser au mieux ce traitement, en y apportant autant d'oxygène que nécessaire pour traiter le maximum de matière organique.

Le traitement de l'azote fait généralement appel à une nitrification suivie d'une dénitrification. La nitrification est une réaction d'oxydation par des bactéries autotrophes, de l'azote ammoniacal en azote nitreux ou nitrique. La dénitrification, consiste en une réduction en azote gazeux, par des bactéries hétérotrophes dénitrifiantes, des nitrites ou nitrates produits lors des réactions de nitrification. Des exemples de traitement de l'azote par nitrification et dénitrification sont donnés dans les documents EP 0 925 258 B1, FR 2 400 489 A1,

US 2015/0266759 A1 et EP 1 144 318 A1.

Plusieurs procédés faisant appel à une nitrification/dénitrification ont été développés. Par exemple un procédé appelé « shunt de nitrates » cherche à stopper l'oxydation de l'azote au stade des nitrites ($NO2^-$) en évitant la production de nitrates. Ce procédé permet de réduire les quantités d'oxygène et de carbone nécessaires pour la nitrification et la dénitrification. Dans un autre procédé, appelé dé-ammonification, la nitrification peut être partielle. Ce procédé peut prendre le nom d'« Anammox » qui est une abréviation de son nom en anglais : « anaerobic ammonium oxidation ».

De façon générale dans les procédés de traitement de l'azote, l'alimentation en oxygène est également importante et peut se baser sur des mesures réalisées à l'aide de capteurs de nitrite $NO_2^-$ ou sur le taux de charge d'ammoniac $NH_4^+$.

Pour le traitement de l'azote le rapport entre la concentration en carbone et la concentration en azote ammoniacale est important. Dans les procédés de type shunt de nitrates ou Anammox, ce rapport permet de gérer la quantité de bactéries autotrophes.

A ce jour, l'enchaînement des deux traitements A et B : matière organique et azote, n'est pas optimisé. Dans les procédés connus, les deux traitements sont optimisés séparément. En tentant de traiter le maximum de matière organique lors de l'étape A, on peut priver l'étape B du carbone nécessaire, notamment aux bactéries autotrophes.

**Résumé de l'invention**

L'invention vise à améliorer l'efficacité de l'enchainement de ces deux traitements en régulant l'apport en oxygène de la première étape en vu du besoin en carbone nécessaire à traiter l'azote lors de la seconde étape. Dans la régulation globale de l'enchainement des deux traitements, carbone puis azote, le procédé de l'invention accepte de dégrader le traitement du carbone réalisé lors de la première étape pour en conserver une quantité suffisante pour réaliser le traitement de l'azote lors de la seconde étape.

A cet effet, l'invention a pour objet un procédé de traitement d'eau résiduaire comprenant :

- une première étape de traitement de carbone contenu dans l'eau résiduaire au moyen d'oxygène réalisée dans un premier réacteur,
- une deuxième étape d'élimination d'azote contenu dans l'eau traitée sous forme d'azote gazeux, distincte de la première étape et réalisée à l'issue de la première étape dans un second réacteur distinct du premier réacteur,

caractérisé en ce qu'il comprend en outre :

- une troisième étape de détermination d'une grandeur représentative d'un rapport entre une concentration en carbone et une concentration en azote dans l'eau entre la première étape et la deuxième étape,
- une quatrième étape de contrôle d'alimentation en oxygène nécessaire à la première étape de façon à minimiser un écart entre la détermination réalisée à la troisième étape et une consigne de grandeur représentative du rapport de concentrations strictement positive.

L'optimisation de l'alimentation en oxygène lors de la première étape présente de nombreux avantages. Elle permet une récupération maximale du carbone dans la première étape tout en en conservant une quantité suffisante pour la deuxième étape. Elle permet de réduire l'énergie nécessaire à l'alimentation en oxygène. Elle permet d'optimiser au mieux la deuxième étape en termes de qualité des effluents sortants.

Avantageusement, lors de la quatrième étape une quantité d'oxygène alimentant le premier réacteur augmente lorsque la grandeur représentative d'un rapport de concentrations déterminée à la troisième étape est supérieure à la consigne de grandeur représentative du rapport de concentrations. Une augmentation de la quantité d'oxygène alimentant la première étape tend à traiter plus de carbone lors de cette première étape et donc à réduire le rapport de concentration déterminé lors de la troisième étape.

Pour la grandeur représentative, la concentration en carbone, exprimée en mg/l, peut être issue d'une mesure de demande chimique en oxygène (DCO) et la concentration en azote, exprimée en mg/l, peut être une concentration de $N-NH_4^+$. La consigne de grandeur représentative du rapport de concentrations est alors avantageusement comprise entre 1 et 10. Cette consigne est strictement positive afin de conserver une part de carbone non traité à l'issue de la première étape. Pour ne pas risquer un manque de carbone pour le traitement de l'azote de la deuxième étape, on conserve une consigne minimale supérieure à 1. Par ailleurs, la valeur maximale de consigne dépend des moyens de traitement de l'azote mis en oeuvre lors de la deuxième étape. Des essais en interne ont montré qu'une consigne inférieure à 10 permet de traiter l'azote lors de la deuxième étape sans risquer de conserver du carbone non traité à l'issu des deux étapes. La consigne peut être choisie en fonction de la nature du traitement de l'azote lors de la deuxième étape.

Le procédé comprend avantageusement en outre :

- une cinquième étape de détermination d'une grandeur représentative de la concentration en azote dans l'eau à l'issue de la deuxième étape,
- une sixième étape de modification de la consigne de grandeur représentative du rapport de concentrations de façon à minimiser un écart entre la détermination réalisée à la cinquième étape et une consigne de grandeur représentative de concentration en azote dans l'eau à l'issue de la deuxième étape.

La variation de consigne permet d'adapter le rapport entre une concentration en carbone et une concentration en azote dans l'eau à l'issue de la première étape à la réalité du traitement effectué lors de la deuxième étape.

Il est possible de remplacer la sixième étape par une septième étape de contrôle de l'alimentation en oxygène nécessaire à la première étape de façon à minimiser un écart entre la détermination réalisée à la cinquième étape et une consigne de grandeur représentative de concentration en azote dans l'eau à l'issue de la deuxième étape. Cette septième étape se fait en complément de la quatrième étape.

Le procédé peut comprendre en outre une huitième étape d'initialisation de l'alimentation en oxygène utilisée lors de la première étape à une valeur donnée, en fonction d'une ou plusieurs variables dont au moins une parmi :

- une mesure de débit d'eau résiduaire alimentant la première étape,
- une mesure de demande chimique en oxygène ou de carbone organique totale dans l'eau résiduaire alimentant la première étape,
- une mesure d'oxygène dissout dans l'eau au cours de la première étape,
- la grandeur représentative du rapport de concentrations déterminé à la troisième étape.

L'initialisation peut bien entendu être réalisée en début de procédé. L'initialisation présente également un intérêt pendant le procédé afin d'éviter que d'éventuelles variations d'alimentation de la première étape en eau résiduaire ne perturbent l'ensemble du procédé. En d'autres termes, l'initialisation rend le procédé plus robuste face à des à-coups dans l'alimentation en eau résiduaire. Les différentes variables utilisées pour l'initialisation permettent de se prémunir de variations physiques de l'eau résiduaire, notamment son débit ainsi que de variations de sa composition aussi bien avant qu'après la première étape.

Avantageusement, le procédé comprend en outre une neuvième étape définissant une borne inférieure de la quantité d'oxygène utilisée lors de la première étape, la borne inférieure étant fonction d'une mesure d'oxygène dissout dans l'eau au cours de la première étape. Le bornage présente un intérêt pour limiter l'amplitude du réglage de la quantité d'oxygène nécessaire à la première étape et notamment éviter de stopper complètement l'alimentation en oxygène.

L'invention a également pour objet un dispositif de traitement d'eau résiduaire comprenant :

- un premier réacteur de traitement de carbone alimenté en eau résiduaire,
- des moyens d'alimentation en oxygène du premier réacteur, l'oxygène servant notamment à traiter le carbone dans le premier réacteur,
- un second réacteur d'élimination d'azote contenu dans l'eau traitée sous forme d'azote gazeux, prélevant l'eau en sortie du premier réacteur, le second réacteur étant distinct du premier réacteur,

caractérisé en ce qu'il comprend en outre :

- des moyens de détermination d'une grandeur représentative d'un rapport entre une concentration en carbone et une concentration en azote dans l'eau entre le premier réacteur et le second réacteur,
- une première boucle d'asservissement configurée pour modifier une quantité d'oxygène apportée dans le premier réacteur par les moyens d'alimentation en oxygène du premier réacteur de façon à minimiser un écart entre d'une part la grandeur représentative issue des moyens de détermination, et d'autre part une consigne de grandeur représentative du rapport de concentrations strictement positive.

La mise en œuvre de deux réacteurs, le premier dédié à la première étape et le second dédié à la deuxième étape du procédé de l'invention permet de réaliser un traitement complet (carbone et azote) de l'eau résiduaire en continu.

La consigne de grandeur représentative du rapport de concentrations peut être fixe. Alternativement, le dispositif comprend des moyens de réglage de la consigne de grandeur représentative du rapport de concentrations afin de mieux adapter le dispositif au traitement de l'eau résiduaire dont la composition peut varier. Les moyens de réglage peuvent être pilotés par un opérateur ou automatisés en fonction d'un ou plusieurs paramètres mesurés dans le dispositif.

Les moyens de détermination d'un rapport de concentration peuvent par exemple comprendre au moins un capteur et/ou un analyseur permettant de déterminer une demande chimique en oxygène et une concentration en ammonium. La demande chimique en oxygène donne une bonne image de la concentration en carbone. Par ailleurs, l'azote à traiter dans l'eau résiduaire est principalement présente sous forme d'ion ammonium d'où l'intérêt de déterminer la concentration d'ammonium.

Le dispositif comprend avantageusement en outre :

- un capteur de mesure d'oxygène dissout dans le premier réacteur et
- des moyens pour faire varier une borne inférieure de quantité d'oxygène apportée dans le premier réacteur, en fonction d'une mesure réalisée par le capteur de mesure d'oxygène dissout dans le premier réacteur.

Avantageusement, le dispositif comprend en outre : des moyens de détermination d'une grandeur représentative de la concentration en azote dans l'eau en sortie du second réacteur. En fonction de la grandeur représentative de la concentration en azote déterminée, le dispositif peut comprendre soit une deuxième boucle d'asservissement configurée pour modifier la consigne de grandeur représentative du rapport de concentrations soit une troisième boucle d'asservissement configurée pour modifier une quantité d'oxygène du premier réacteur. La deuxième et la troisième boucle sont configurées de façon à minimiser un écart entre la grandeur représentative de la concentration en azote dans l'eau en sortie du second réacteur et une consigne de grandeur représentative de la concentration en azote dans l'eau en sortie du second réacteur.

Avantageusement, le dispositif comprend en outre des moyens pour initialiser la quantité d'oxygène apportée dans le premier réacteur à une valeur donnée, en fonction d'une ou plusieurs mesures ou déterminations réalisées par au moins un parmi :

- un capteur de débit d'eau résiduaire alimentant le premier réacteur,
- un capteur ou un analyseur de demande chimique en oxygène ou de carbone organique total dans l'eau résiduaire alimentant le premier réacteur,
- un capteur d'oxygène dissout dans l'eau du premier réacteur,
- les moyens de détermination d'une grandeur représentative d'un rapport entre une concentration en carbone et une concentration en azote dans l'eau en sortie du premier réacteur.

Avantageusement, les moyens d'alimentation en oxygène du premier réacteur comprennent des moyens d'alimentation en air. En effet, l'air comprend typiquement de l'ordre de 20% d'oxygène. Une alimentation du premier réacteur en air est aisée à réaliser.

**Brève description des figures**

L'invention sera mieux comprise et d'autres avantages apparaîtront à la lecture de la description détaillée d'un mode de réalisation donné à titre d'exemple, description illustrée par le dessin joint dans lequel :

la figure 1 représente sous forme de schéma bloc, un premier mode de réalisation de l'invention ;
la figure 2 représente sous forme de schéma bloc, un second mode de réalisation de l'invention.

Par souci de clarté, les mêmes éléments porteront les mêmes repères dans les différentes figures.

**Description détaillée de différents modes de réalisation de l'invention**

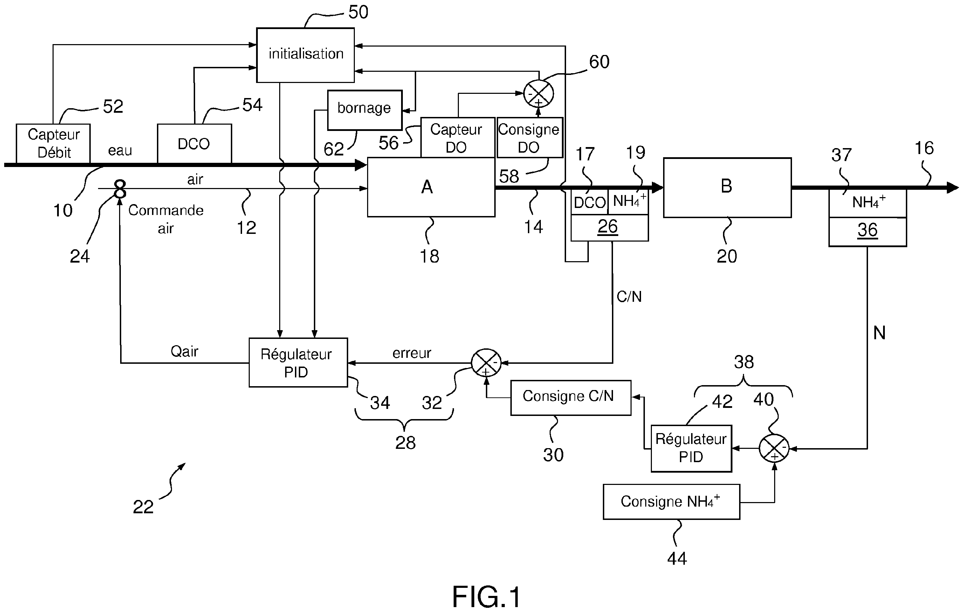

La figure 1 représente sous forme de schéma bloc un procédé et un dispositif selon l'invention adaptés à traiter l'eau résiduaire 10. Par eau résiduaire on entend tout type d'effluent, urbain, industriel ou domestique dans lequel on souhaite traiter une pollution carbonée et azotée. L'eau résiduaire est traitée en deux étapes successives, notées A et B. Lors de l'étape A, le carbone, contenu dans l'eau résiduaire 10 sous forme de matière organique, est traité au moyen d'oxygène 12. L'eau 14, issue du traitement de A est à son tour traitée lors de l'étape B, pour la débarrasser partiellement ou totalement de l'azote qui y est contenu. Dans l'eau résiduaire le carbone est principalement présent sous forme de matière organique et l'azote est principalement présent sous forme d'ammonium $NH_4^+$. A l'issue de l'étape B, l'eau traitée porte la référence 16. Une concentration maximale d'ammonium présent dans l'eau en sortie de l'étape B peut être imposée par des normes ou par d'autres traitements réalisés en aval de l'étape B. L'objet de l'étape B est de fournir de l'eau traitée 16 contenant une concentration d'ammonium, ou plus généralement d'azote présent dans l'eau, inférieure à la concentration maximale autorisée. L'élimination de l'azote est réalisée en produisant de l'azote gazeux qui peut s'échapper librement dans l'air ambiant.

Les étapes A et B sont réalisées dans deux réacteurs 18 et 20 distincts dans lesquels sont opérées respectivement les deux étapes A et B. Les réacteurs 18 et 20 peuvent être des cuves fermées ou des bassins ouverts.

L'étape B peut faire appel à un procédé en deux sous étapes : nitritation et/ou nitrification où l'ammonium est oxydé en nitrites et/ou en nitrates suivi d'une dénitritation et/ou dénitrification où les nitrites et/ou nitrates sont réduits pour former de l'azote gazeux. Les deux sous étapes de nitritation et/ou nitrification et de dénitritation et/ou dénitrification peuvent être réalisées dans un seul réacteur ou dans deux réacteurs séparés. Pour les besoins de l'invention, le ou les réacteurs dans lesquels l'étape B est réalisée sont distincts du réacteur 18. Pour ne pas alourdir la description, le ou les réacteurs dans lesquels l'étape B est réalisée portent le repère 20.

Le dispositif 22 dans lequel sont opérées les deux étapes A et B comprend des moyens d'alimentation 24 en oxygène 12 du réacteur 18. L'oxygène 12 peut être apporté sous forme pure. Avantageusement l'oxygène est apporté sous forme d'air qui, typiquement, comprend de l'ordre de 20% d'oxygène. Les moyens d'alimentation 24 peuvent être formés d'un ventilateur ou d'une pompe apportant l'air dans le réacteur 18. Afin d'améliorer l'efficacité de la réaction de bio-oxydation du carbone dans le premier réacteur 18, il est possible d'y brasser l'eau et l'air. Des bactéries sont responsables de la catalyse de la réaction de bio-oxydation. Dans le réacteur 18, la matière organique est oxydée principalement en biomasse qui peut être éliminée ou récupérée afin d'être valorisée. Il est par exemple possible de mettre en œuvre un procédé de type boues activées.

Selon l'invention, lors d'une étape 26 on détermine une grandeur représentative d'un rapport entre une concentration en carbone et une concentration en azote dans l'eau 14 à l'issue de la première étape A et avant de débuter l'étape B. Ce rapport est noté C/N par la suite. Cette détermination peut être réalisée au moyen de deux capteurs, l'un pour la mesure de concentration en carbone et l'autre pour la mesure de concentration en ammonium en sortie du réacteur 18 dans l'eau 14. Alternativement, il est possible de ne mettre en œuvre qu'une seule mesure à partir de laquelle on détermine le rapport de concentration C/N. Il est par exemple possible de mettre en œuvre un capteur de mesure de transmission d'un rayonnement ultraviolet. Des raies spécifiques au carbone et à l'azote sont analysées et leur intensité permet de définir la concentration en carbone et la concentration en azote dans l'eau 14 puis déterminer le rapport de concentration C/N.

Pour mesurer la concentration en carbone dans l'eau 14, il est possible de mettre en œuvre un capteur de mesure ou un analyseur 17 de la demande chimique en oxygène (DCO) dans l'eau 14, ce qui permet de retrouver la concentration en carbone. Il est également possible de mesurer la demande biologique en oxygène (DBO) ou le carbone organique total (COT). Certaines mesures comme la demande chimique en oxygène font parfois l'objet de controverses dans la littérature. Cependant, comme on le verra ultérieurement, la mesure de concentration de carbone est utilisée dans une boucle d'asservissement. En conséquence, même si la mesure est entachée d'erreur, elle permet tout de même de réaliser l'asservissement attendu.

Pour mesurer la concentration en ammonium, il est possible de mettre en œuvre un capteur ou un analyseur d'ammonium 19 tel que par exemple une électrode sélective d'ions connue dans la littérature par ses initiales ISE anglo-saxonnes pour « Ion Selective Electrode ». A l'aide des mesures obtenues par les deux capteurs ou analyseur, il est aisé de déterminer le rapport de concentration C/N en divisant la valeur de la mesure réalisée par le capteur ou analyseur 17 par celle obtenue par le capteur ou analyseur 19.

De plus, lors d'une étape 28, on contrôle l'alimentation en oxygène nécessaire à l'étape A de façon à minimiser un écart entre la grandeur représentative du rapport de concentration déterminé à l'étape 26 et une consigne 30 strictement positive. La consigne 30 est elle aussi une grandeur représentative d'un rapport C/N de consigne. La valeur de la consigne 30 permet de ne pas traiter une partie du carbone lors de l'étape A et de conserver cette partie de carbone pour les besoins de l'étape B.

L'étape 28 peut être réalisée au moyen d'un comparateur 32 et d'un régulateur 34. Le comparateur 32 reçoit la valeur de la grandeur représentative du rapport C/N déterminé à l'étape 26 et la consigne 30. Le comparateur 32 calcule une différence entre la valeur de la grandeur représentative du rapport C/N et la consigne 30 qu'il transmet au régulateur 34 qui pilote à son tour les moyens d'alimentation en oxygène 24. Le régulateur 34 peut être un régulateur de type Proportionnel-Intégral-Dérivé. Les différents coefficients du régulateur peuvent être réglés de façon empirique lors de la mise en œuvre globale du procédé selon l'invention. Les différents coefficients tiennent notamment compte de possibles évolutions de concentration en matière organique et en azote dans l'eau résiduaire 10.

La détermination de la grandeur représentative du rapport de concentration C/N, le comparateur 32 et le régulateur 34 peuvent être mis en œuvre au moyen de composants électroniques discrets ou au moyen d'un calculateur dédié ou générique programmé à cet effet. La consigne 30 peut être mémorisée dans le calculateur.

Le ou les capteurs mis en œuvre à l'étape 26, les composants ou le calculateur mis en œuvre pour les étapes 26 et 28 forment une première boucle d'asservissement configurée pour modifier une quantité d'oxygène Qair apportée dans le réacteur 18. Plus précisément, la première boucle d'asservissement est configurée pour augmenter une quantité d'oxygène alimentant le réacteur 18 lorsque la grandeur représentative du rapport de concentrations C/N déterminé en sortie du réacteur 18 est supérieure à la consigne 30 de grandeur représentative du rapport de concentrations.

La valeur de la consigne 30 peut être fixe et prédéfinie en fonction du type de traitement mis en œuvre dans l'étape B. On a vu plus haut que la grandeur représentative du rapport C/N peut être entachée d'erreur. Afin d'affiner l'asservissement il est possible de modifier la consigne 30 de façon empirique pour pallier l'éventuelle erreur dans la mesure permettant de déterminer le rapport C/N.

La concentration en carbone, peut être exprimée en mg/l et peut être issue d'une mesure de demande chimique en oxygène DCO et la concentration en azote, également exprimée en mg/l, peut être une concentration de $N-NH_4^+$. Autrement dit, la concentration en azote est une concentration en ion ammonium exprimée en masse d'azote par unité de volume. Avec des paramètres ainsi définis, des rapports élevés C/N de l'ordre de 5 à 10 sont intéressant lorsque, pour l'étape B, sont mis en œuvre une nitrification complète suivie d'une dénitrification ou même pour le shunt des nitrates.

Dans le cas d'une dé-ammonification mis en œuvre dans l'étape B, un rapport C/N plus faible est intéressant afin de gérer la croissance de bactéries hétérotrophes qui concurrencent les bactéries anaérobies oxydantes. Un rapport C/N dans la plage de 6 à 10 conduit à une prédominance des bactéries hétérotrophes. Un rapport C/N dans la plage de 1 à 3 conduit à une prédominance des bactéries anaérobies et un rapport C/N dans la plage 3 à 5 conduit à une situation intermédiaire. De façon plus générale, la consigne 30 de rapport de concentrations est avantageusement comprise entre 1 et 10.

Alternativement, il est possible de faire varier la consigne 30 de rapport de concentrations C/N. Des moyens de réglages sont prévus à cet effet. Le réglage de la consigne 30 peut être fait par un utilisateur de façon manuelle. Le réglage de la consigne peut également être automatique et fonction d'un paramètre mesuré dans le dispositif 22. Avantageusement, la consigne 30 est fonction du résultat de l'étape B. Plus précisément, lors d'une étape 36, on détermine une grandeur représentative de la concentration en azote dans l'eau 16 à l'issue de l'étape B et lors d'une étape 38, on modifie la consigne 30 de façon à minimiser un écart entre la grandeur représentative de la concentration en azote déterminée à l'étape 36 et une consigne 44 de grandeur représentative de concentration en azote dans l'eau à l'issue de l'étape B. La variation de la consigne 30 permet de mieux adapter le rapport C/N à la réalité du traitement effectué lors de l'étape B.

L'étape 36 peut être réalisée au moyen d'un capteur 37 de concentration d'azote présente dans l'eau et la valeur déterminée peut être la valeur mesurée par ce capteur. Comme précédemment ce capteur peut être une électrode sélective d'ions permettant de mesurer la concentration en ammonium. Il est également possible d'interposer un calculateur faisant intervenir des corrections à une valeur mesurée par le capteur.

L'étape 38 peut être réalisée au moyen d'un comparateur 40 et d'un régulateur 42. Le comparateur 40 reçoit la valeur de concentration en azote dans l'eau 16 déterminée à l'étape 36 et la consigne 44 de concentration en azote, par exemple sous forme d'ammonium dans l'eau 16. Le capteur 37, le comparateur 40 et le régulateur 42 forment un exemple de moyens de réglages de la consigne 30.

Le comparateur 40 calcule une différence entre la valeur de concentration en azote déterminée à l'étape 36 et la consigne 44 qu'il transmet au régulateur 42 qui fait varier à son tour la consigne 30 de rapport de concentrations C/N. Comme pour le régulateur 34, le régulateur 42 peut être un régulateur de type Proportionnel-Intégral-Dérivé. Les différents coefficients du régulateur peuvent être réglés de façon empirique lors de la mise en œuvre globale du procédé selon l'invention. Ces coefficients tiennent par exemple compte du temps de réaction du régulateur 42 par rapport à celui du régulateur 34.

La détermination de la concentration en azote réalisée à l'étape 36, le comparateur 40 et le régulateur 42 peuvent être mis en œuvre au moyen de composants électroniques discrets ou au moyen d'un calculateur dédié ou générique programmé à cet effet. Ce calculateur peut être celui déjà mis en œuvre pour les étapes 26 et 28. La consigne 44 peut être mémorisée dans le calculateur.

Le capteur mis en œuvre à l'étape 36, les composants ou le calculateur mis en œuvre pour l'étape 38 forment une deuxième boucle d'asservissement configurée pour modifier la consigne 30 de rapport de concentrations C/N en fonction de la concentration en azote dans l'eau en sortie du second réacteur 20.

Au début du procédé ou en cours de procédé, il est avantageux de réaliser une étape d'initialisation 50 de l'alimentation en oxygène utilisée lors de l'étape A. En cours de procédé, cette initialisation possède un intérêt particulier lorsque des irrégularités de l'alimentation en eau résiduaires 10 apparaissent avant l'étape A. Ces irrégularités peuvent concerner le débit d'eau résiduaire, sa composition, voire même les conditions d'environnement : température et pression. Toujours en cours de procédé, il peut être intéressant d'initialiser l'alimentation en oxygène en fonction de variables intervenant dans le réacteur 18 ou même en sortie du réacteur. Par exemple, si la concentration C/N déterminée à l'étape 26 se met à diverger, il est avantageux d'initialiser l'alimentation en oxygène à une valeur donnée par exemple en réglant l'alimentation en oxygène à un débit d'oxygène donné.

L'initialisation de l'alimentation en oxygène peut être faite en fonction d'une ou plusieurs variables dont au moins une parmi :

- une mesure de débit d'eau résiduaire 10 alimentant l'étape A,
- une mesure de demande chimique en oxygène (DCO) ou de carbone organique totale (COT) dans l'eau résiduaire 10 alimentant l'étape A,
- une mesure d'oxygène dissout (DO) dans l'eau au cours de l'étape A,
- la grandeur représentative du rapport de concentrations C/N déterminé à l'étape 26.

Pour chacune de ces variables, l'alimentation en oxygène peut être initialisée à une quantité ou un débit prédéfini. Un tableau possédant autant d'entrées que de variables peut prédéfinir l'alimentation en oxygène en fonction de la valeur de chacune des variables retenues. Ce tableau peut être défini de façon empirique à partir d'essais réalisés sur le procédé notamment, en testant différents à-coups de concentration de matière dans l'eau résiduaire entrant dans l'étape A.

La mesure de débit d'eau résiduaire 10 alimentant l'étape A peut être réalisée au moyen d'un débitmètre 52 disposé dans une canalisation alimentant le réacteur 18 en eau résiduaire 10. La mesure de demande chimique en oxygène DCO peut également être réalisée dans la canalisation alimentant le réacteur 18 en eau résiduaire 10 au moyen d'un capteur approprié 54. La mesure de DCO peut être imprécise et on peut lui préférer une mesure de carbone organique total COT plus facile à réaliser en temps réel. La mesure d'oxygène dissout DO dans l'eau au cours de l'étape A est réalisée au moyen d'un capteur 56 disposé dans le réacteur 18. Le capteur 56 peut utiliser une électrode et réaliser une mesure de type électrochimique. Alternativement, il existe également des sondes optiques réalisant une mesure par fluorescence. Concernant la valeur d'oxygène dissout DO utilisée pour l'initialisation, Il est possible de faire varier une valeur attendue 58 de l'oxygène dissout DO et de comparer la valeur mesurée d'oxygène dissout à la valeur attendue pour décider d'initialiser ou non l'alimentation en oxygène. Un comparateur 60 est prévu à cet effet.

L'étape d'initialisation 50 de l'alimentation en oxygène peut être mise en œuvre au moyen de composants électroniques discrets ou au moyen d'un calculateur dédié ou générique programmé à cet effet. Ce calculateur peut être celui déjà mis en œuvre pour les étapes 26 et 28. La consigne 58 peut être mémorisée dans le calculateur.

En cours de procédé, il est avantageux de réaliser une étape 62 définissant une borne inférieure de la quantité d'oxygène utilisée lors de l'étape A afin d'éviter que le régulateur 34 ne vienne à stopper complètement l'alimentation en oxygène. La borne inférieure peut être définie et fixée à l'avance indépendamment de tout paramètre. La valeur de la borne inférieure peut être définie de façon empirique à partir d'essais réalisés sur le procédé notamment, en testant différentes concentrations de matière dans l'eau résiduaire entrant dans l'étape A. Alternativement, la valeur de la borne inférieure peut être variable et adaptée en fonction de mesures réalisées dans le dispositif 22. Avantageusement, la borne inférieure est fonction d'une mesure d'oxygène dissout DO dans l'eau au cours de l'étape A. En effet, si l'oxygène dissout augmente dans le réacteur 18, il est possible de réduire la valeur de la borne inférieure. La fonction reliant la borne inférieure et la mesure d'oxygène dissout peut être établie de façon empirique, par exemple pour que le résultat du traitement reste optimum, notamment pour que la concentration en azote dans l'eau en sortie du second réacteur 20 reste dans les tolérances souhaitées, par exemple par une norme.

Ici encore, l'étape 62 définissant une borne inférieure de la quantité d'oxygène peut être mise en œuvre au moyen de composants électroniques discrets ou au moyen d'un calculateur dédié ou générique programmé à cet effet. Ce calculateur peut être celui déjà mis en œuvre pour les étapes 26 et 28.

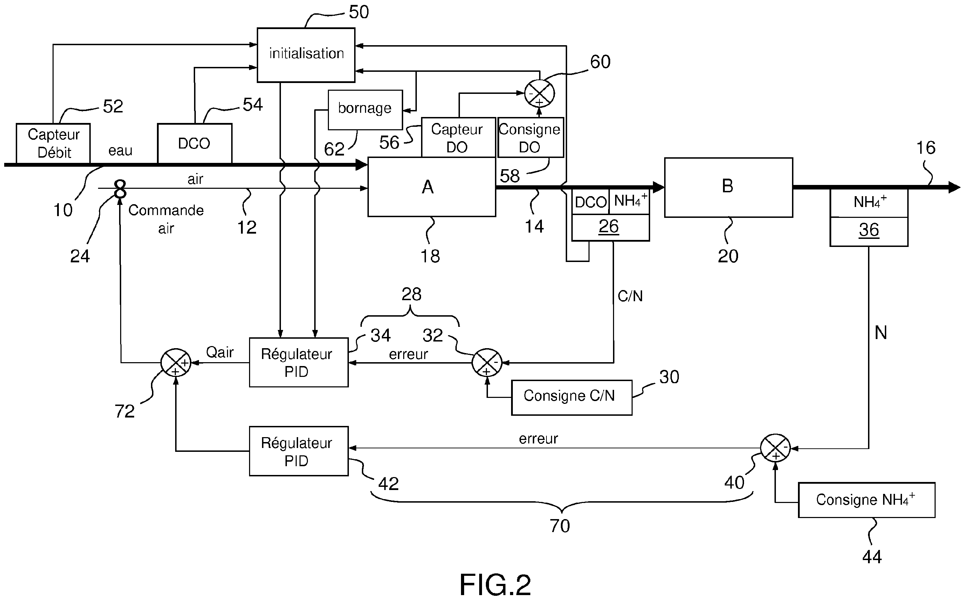

La figure 2 représente un second mode de réalisation de l'invention. On retrouve sur la figure 2, les deux étapes A et B qui s'enchainant pour traiter l'eau résiduaire 10. On retrouve également les étapes 28 et 26 assurant le contrôle d'alimentation en oxygène de l'étape A en fonction du rapport C/N. on retrouve aussi les étapes d'initialisation 50 et de bornage 62.

A la différence du mode de réalisation décrit à l'aide de la figure 1, dans le mode de réalisation de la figure 2, la consigne 30 de valeur représentative du rapport de concentrations C/N reste fixe et l'étape 36 de détermination de la concentration en azote dans l'eau 16 à l'issue de l'étape B n'est pas utilisée pour modifier la consigne 30. Dans le mode de réalisation de la figure 2, lors d'une étape 70, on modifie l'alimentation en oxygène nécessaire à l'étape A en fonction de la concentration en azote déterminée à l'étape 36. Cette adaptation de l'alimentation en oxygène se fait en complément de celle réalisée à l'étape 28. Plus précisément, on cherche ici à minimiser un écart entre la détermination réalisée à l'étape 36 et la consigne 44.

Le comparateur 40 et le régulateur 42 sont ici utilisés pour mettre en œuvre l'étape 70. Un opérateur 72, par exemple un sommateur, permet de coupler les sorties des régulateurs 34 et 42 afin de piloter les moyens d'alimentation 24.

Le capteur mis en œuvre à l'étape 36, les composants ou le calculateur mis en œuvre pour l'étape 70 forment une troisième boucle d'asservissement configurée pour modifier une quantité d'oxygène Qair apportée dans le réacteur 18 en complément de la première boucle d'asservissement.

## Revendications

1. Procédé de traitement d'eau résiduaire comprenant :

    • une première étape (A) de traitement de carbone contenu dans l'eau résiduaire (10) au moyen d'oxygène réalisée dans un premier réacteur (18),
    • une deuxième étape (B) d'élimination d'azote contenu dans l'eau traitée (14) sous forme d'azote gazeux, distincte de la première étape (A) et réalisée à l'issue de la première étape (A) dans un second réacteur (20) distinct du premier réacteur (18),

    **caractérisé en ce qu'**il comprend en outre :

    • une troisième étape (26) de détermination d'une grandeur représentative d'un rapport (C/N) entre une concentration en carbone et une concentration en azote dans l'eau (14) entre la première étape (A) et la deuxième étape (B),
    • une quatrième étape (28) de contrôle d'alimentation en oxygène nécessaire à la première étape (A) de façon à minimiser un écart entre la détermination réalisée à la troisième étape (26) et une consigne (30) de grandeur représentative du rapport de concentrations strictement positive.

2. Procédé selon la revendication 1, **caractérisé en ce que** lors de la quatrième étape (28) une quantité d'oxygène alimentant le premier réacteur (18) augmente lorsque la grandeur représentative d'un rapport de concentrations déterminée à la troisième étape (26) est supérieure à la consigne (30) de grandeur représentative du rapport de concentrations.

**3.** Procédé selon l'une des revendications 1 ou 2, **caractérisé en ce que** pour la grandeur représentative, la concentration en carbone exprimée en mg/l est issue d'une mesure de demande chimique en oxygène (DCO) et la concentration en azote, exprimée en mg/l, est une concentration de N-NH$_4$$^+$, et en ce que la consigne (30) de grandeur représentative du rapport de concentrations est comprise entre 1 et 10.

**4.** Procédé selon l'une des revendications 1 à 3, **caractérisé en ce qu'**il comprend en outre :

• une cinquième étape (36) de détermination d'une grandeur représentative de la concentration en azote dans l'eau (16) à l'issue de la deuxième étape (B),
• une sixième étape (38) de modification de la consigne (30) de grandeur représentative du rapport de concentrations de façon à minimiser un écart entre la détermination réalisée à la cinquième étape (36) et une consigne (44) de grandeur représentative de concentration en azote dans l'eau à l'issue de la deuxième étape (B).

**5.** Procédé selon l'une des revendications 1 à 3, **caractérisé en ce qu'**il comprend en outre :

• une cinquième étape (36) de détermination d'une grandeur représentative de la concentration en azote dans l'eau (16) à l'issue de la deuxième étape (B),
• une septième étape (70) de contrôle de l'alimentation en oxygène nécessaire à la première étape (A) de façon à minimiser un écart entre la détermination réalisée à la cinquième étape (36) et une consigne (44) de grandeur représentative de concentration en azote dans l'eau à l'issue de la deuxième étape (B).

**6.** Procédé selon l'une des revendications 1 à 5, **caractérisé en ce qu'**il comprend en outre une huitième étape (50) d'initialisation de l'alimentation en oxygène utilisée lors de la première étape (A) à une valeur donnée, en fonction d'une ou plusieurs variables dont au moins une parmi :

• une mesure de débit d'eau résiduaire (10) alimentant la première étape (A),
• une mesure de demande chimique en oxygène (DCO) ou de carbone organique total (COT) dans l'eau résiduaire (10) alimentant la première étape (A),
• une mesure d'oxygène dissout (DO) dans l'eau au cours de la première étape (A),
• la grandeur représentative du rapport de concentrations déterminé à la troisième étape (26).

**7.** Procédé selon l'une des revendications 1 à 6, **caractérisé en ce qu'**il comprend en outre une neuvième étape (62) définissant une borne inférieure de la quantité d'oxygène (Qair) utilisée lors de la première étape (A), la borne inférieure étant fonction d'une mesure d'oxygène dissout (DO) dans l'eau au cours de la première étape (A).

**8.** Dispositif de traitement d'eau résiduaire comprenant :

• un premier réacteur (18) de traitement de carbone alimenté en eau résiduaire (10),
• des moyens d'alimentation en oxygène (24) du premier réacteur (18), l'oxygène servant notamment à traiter le carbone dans le premier réacteur (18),
• un second réacteur (20) d'élimination d'azote contenu dans l'eau traitée sous forme d'azote gazeux, prélevant l'eau en sortie du premier réacteur (18), le second réacteur (20) étant distinct du premier réacteur (18), **caractérisé en ce qu'**il comprend en outre :
• des moyens de détermination d'une grandeur représentative d'un rapport (C/N) entre une concentration en carbone et une concentration en azote dans l'eau entre le premier réacteur (18) et le second réacteur (20),
• une première boucle d'asservissement (30, 32, 34) configurée pour modifier une quantité d'oxygène (Qair) apportée dans le premier réacteur (18) par les moyens d'alimentation en oxygène (24) du premier réacteur (18) de façon à minimiser un écart entre d'une part la grandeur représentative issue des moyens de détermination, et d'autre part une consigne (30) de grandeur représentative du rapport de concentrations strictement positive.

**9.** Dispositif selon la revendication 8, **caractérisé en ce qu'**il comprend des moyens de réglage de la consigne (30) de grandeur représentative du rapport de concentrations.

**10.** Dispositif selon l'une des revendications 8 ou 9, **caractérisé en ce que** les moyens de détermination d'une grandeur représentative d'un rapport de concentration comprennent au moins un capteur et/ou un analyseur permettant de déterminer une demande chimique en oxygène (17) et une concentration d'ammonium (19).

**11.** Dispositif selon l'une des revendications 8 à 10, **caractérisé en ce qu'**il comprend en outre :

• un capteur de mesure d'oxygène dissout (56) dans le premier réacteur (18) et

• des moyens pour faire varier une borne inférieure de quantité d'oxygène apportée dans le premier réacteur (18), en fonction d'une mesure réalisée par le capteur de mesure d'oxygène dissout (56) dans le premier réacteur (18).

**12.** Dispositif selon l'une des revendications 8 à 11, **caractérisé en ce qu'**il comprend en outre :

• des moyens de détermination d'une grandeur représentative de la concentration en azote (37) dans l'eau (16) en sortie du second réacteur (20) et

• une deuxième boucle d'asservissement (37, 40, 42, 44) configurée pour modifier la consigne (30) de grandeur représentative du rapport de concentrations de façon à minimiser un écart entre la grandeur représentative de la concentration en azote dans l'eau (16) en sortie du second réacteur (20) et une consigne (44) de grandeur représentative de la concentration en azote dans l'eau en sortie du second réacteur (20).

**13.** Dispositif selon l'une des revendications 8 à 11, **caractérisé en ce qu'**il comprend en outre :

• des moyens de détermination d'une grandeur représentative de la concentration en azote dans l'eau en sortie du second réacteur (20) et

• une troisième boucle d'asservissement configurée pour modifier une quantité d'oxygène (Qair) du premier réacteur (18) de façon à minimiser un écart entre la grandeur représentative de la concentration en azote dans l'eau en sortie du second réacteur (20) et une consigne (44) de grandeur représentative de la concentration en azote dans l'eau en sortie du second réacteur (20).

**14.** Dispositif selon l'une des revendications 8 à 13, **caractérisé en ce qu'**il comprend en outre des moyens pour initialiser la quantité d'oxygène (50) apportée dans le premier réacteur (18) à une valeur donnée, en fonction d'une ou plusieurs mesures ou déterminations réalisées par au moins un parmi :

• un capteur de débit (52) d'eau résiduaire (10) alimentant le premier réacteur (18),

• un capteur ou un analyseur de demande chimique en oxygène (54) ou de carbone organique total dans l'eau résiduaire (10) alimentant le premier réacteur (18),

• un capteur d'oxygène dissout (56) dans l'eau du premier réacteur (18),

• les moyens de détermination d'une grandeur représentative d'un rapport (C/N) entre une concentration en carbone et une concentration en azote dans l'eau en sortie du premier réacteur (18).

**15.** Dispositif selon l'une des revendications 8 à 14, **caractérisé en ce que** les moyens d'alimentation en oxygène (24) du premier réacteur (18) comprennent des moyens d'alimentation en air.

**Patentansprüche**

**1.** Verfahren zur Behandlung von Abwasser, das Folgendes umfasst:

• einen ersten Schritt (A) des Behandelns von im Abwasser (10) enthaltenem Kohlenstoff mit Hilfe von Sauerstoff, der in einem ersten Reaktor (18) durchgeführt wird,

• einen zweiten Schritt (B) des Beseitigens von in dem behandelten Wasser (14) enthaltenem Stickstoff in Form von Stickstoffgas, der vom ersten Schritt (A) verschieden ist und nach dem ersten Schritt (A) in einem zweiten Reaktor (20) durchgeführt wird, der vom ersten Reaktor (18) verschieden ist,

**dadurch gekennzeichnet, dass** es ferner Folgendes umfasst:

• einen dritten Schritt (26) des Bestimmens einer Größe, die für ein Verhältnis (C/N) zwischen einer Kohlenstoffkonzentration und einer Stickstoffkonzentration im Wasser (14) zwischen dem ersten Schritt (A) und dem zweiten Schritt (B) repräsentativ ist,

• einen vierten Schritt (28) des Steuerns der Zufuhr von für den ersten Schritt (A) erforderlichem Sauerstoff, um eine Abweichung zwischen der im dritten Schritt (26) durchgeführten Bestimmung und einer Sollgröße (30) zu minimieren, die für das streng positive Verhältnis der Konzentrationen repräsentativ ist.

**2.** Verfahren nach Anspruch 1, **dadurch gekennzeichnet, dass** im vierten Schritt (28) eine dem ersten Reaktor (18) zugeführte Sauerstoffmenge zunimmt, wenn die im dritten Schritt (26) ermittelte für ein Konzentrationsverhältnis repräsentative Größe größer ist als die Sollgröße (30), die für das Konzentrationsverhältnis repräsentativ ist.

3. Verfahren nach Anspruch 1 oder 2, **dadurch gekennzeichnet, dass** für die repräsentative Größe die in mg/l ausgedrückte Kohlenstoffkonzentration aus einer Messung des chemischen Sauerstoffbedarfs (DCO) stammt und die in mg/l ausgedrückte Stickstoffkonzentration eine Konzentration von $N-NH_4^+$ ist, und dadurch, dass die Sollgröße (30), die für das Konzentrationsverhältnis repräsentativ ist, im Bereich von 1 bis 10 liegt.

4. Verfahren nach einem der Ansprüche 1 bis 3, **dadurch gekennzeichnet, dass** es ferner Folgendes umfasst:

   • einen fünften Schritt (36) des Bestimmens einer Größe, die für die Stickstoffkonzentration im Wasser (16) am Ende des zweiten Schritts (B) repräsentativ ist,
   • einen sechsten Schritt (38) des Modifizierens der Sollgröße (30), die für das Konzentrationsverhältnis repräsentativ ist, um eine Abweichung zwischen der im fünften Schritt (36) durchgeführten Bestimmung und einer Sollgröße (44), die für die Stickstoffkonzentration im Wasser am Ende des zweiten Schritts (B) repräsentativ ist, zu minimieren.

5. Verfahren nach einem der Ansprüche 1 bis 3, **dadurch gekennzeichnet, dass** es ferner Folgendes umfasst:

   • einen fünften Schritt (36) des Bestimmens einer für die Stickstoffkonzentration im Wasser (16) am Ende des zweiten Schritts (B) repräsentativen Größe,
   • einen siebten Schritt (70) des Steuerns der Zufuhr des für den ersten Schritt (A) erforderlichen Sauerstoffs, um eine Abweichung zwischen der im fünften Schritt (36) durchgeführten Bestimmung und einer Sollgröße (44), die für die Stickstoffkonzentration im Wasser am Ende des zweiten Schritts (B) repräsentativ ist, zu minimieren.

6. Verfahren nach einem der Ansprüche 1 bis 5, **dadurch gekennzeichnet, dass** es ferner einen achten Schritt (50) des Einleitens der Zufuhr des im ersten Schritt (A) benutzten Sauerstoffs mit einem gegebenen Wert in Abhängigkeit von einer oder mehreren Variablen umfasst, darunter mindestens eine der Folgenden:

   • ein Messwert des Durchflusses von im ersten Schritt (A) zugeführtem Abwasser (10),
   • ein Messwert des chemischen Sauerstoffbedarfs (CSB) oder des gesamten organischen Kohlenstoffs (TOC) in dem im ersten Schritt (A) zugeführten Abwasser (10),
   • ein Messwert des im ersten Schritt (A) im Wasser gelösten Sauerstoffs (DO),
   • die Größe, die für das im dritten Schritt (26) bestimmte Konzentrationsverhältnis repräsentativ ist.

7. Verfahren nach einem der Ansprüche 1 bis 6, **dadurch gekennzeichnet, dass** es ferner einen neunten Schritt (62) des Definierens einer Untergrenze der im ersten Schritt (A) benutzten Sauerstoffmenge (Qair) umfasst, wobei die Untergrenze von einer Messung des im ersten Schritt (A) im Wasser gelösten Sauerstoffs (DO) abhängt.

8. Vorrichtung zur Behandlung von Abwasser, die Folgendes umfasst:

   • einen mit Abwasser (10) versorgten ersten Kohlenstoffbehandlungsreaktor (18),
   • Mittel zum Zuführen von Sauerstoff (24) zum ersten Reaktor (18), wobei der Sauerstoff insbesondere zum Behandeln des Kohlenstoffs im ersten Reaktor (18) dient,
   • einen zweiten Reaktor (20) zum Beseitigen von im behandelten Wasser enthaltenem Stickstoff in Form von Stickstoffgas, der das Wasser am Ausgang des ersten Reaktors (18) entnimmt, wobei der zweite Reaktor (20) vom ersten Reaktor (18) verschieden ist,
   **dadurch gekennzeichnet, dass** sie außerdem Folgendes umfasst:
   • Mittel zur Bestimmung einer Größe, die für ein Verhältnis (C/N) zwischen einer Kohlenstoffkonzentration und einer Stickstoffkonzentration im Wasser zwischen dem ersten Reaktor (18) und dem zweiten Reaktor (20) repräsentativ ist,
   • eine erste Regelschleife (30, 32, 34), konfiguriert zum Modifizieren einer durch die Sauerstoffzufuhrmittel (24) des ersten Reaktors (18) in den ersten Reaktor (18) eingebrachte Sauerstoffmenge (Qair), um eine Abweichung zwischen einerseits der repräsentativen Größe aus den Bestimmungsmitteln und andererseits einer streng positiven Sollgröße (30), die für das Konzentrationsverhältnis repräsentativ ist, zu minimieren.

9. Vorrichtung nach Anspruch 8, **dadurch gekennzeichnet, dass** sie Mittel zum Regeln der Sollgröße (30), die für das Konzentrationsverhältnis repräsentativ ist, umfasst.

**10.** Vorrichtung nach Anspruch 8 oder 9, **dadurch gekennzeichnet, dass** die Mittel zur Bestimmung einer für ein Konzentrationsverhältnis repräsentativen Größe mindestens einen Sensor und/oder einen Analysator umfassen, mit dem/denen ein chemischer Sauerstoffbedarf (17) und eine Ammoniumkonzentration (19) bestimmt werden können.

**11.** Vorrichtung nach einem der Ansprüche 8 bis 10, **dadurch gekennzeichnet, dass** sie ferner Folgendes umfasst:

• einen Sensor (56) zur Messung von gelöstem Sauerstoff im ersten Reaktor (18) und
• Mittel zum Variieren einer Untergrenze der im ersten Reaktor (18) zugeführten Sauerstoffmenge in Abhängigkeit von einem von dem Sensor (56) zum Messen von gelöstem Sauerstoff im ersten Reaktor (18) durchgeführten Messung.

**12.** Vorrichtung nach einem der Ansprüche 8 bis 11, **dadurch gekennzeichnet, dass** sie ferner Folgendes umfasst:

• Mittel zum Bestimmen einer Größe, die für die Stickstoffkonzentration (37) im Wasser (16) am Ausgang des zweiten Reaktors (20) repräsentativ ist, und
• eine zweite Regelschleife (37, 40, 42, 44), konfiguriert zum Modifizieren der Sollgröße (30), die für das Konzentrationsverhältnis repräsentativ ist, um eine Abweichung zwischen der für die Stickstoffkonzentration im Wasser (16) am Ausgang des zweiten Reaktors (20) repräsentativen Größe und einer Sollgröße (44), die für die Stickstoffkonzentration im Wasser am Ausgang des zweiten Reaktors (20) repräsentativ ist, zu minimieren.

**13.** Vorrichtung nach einem der Ansprüche 8 bis 11, **dadurch gekennzeichnet, dass** sie ferner Folgendes umfasst:

• Mittel zur Bestimmung einer für die Stickstoffkonzentration im Wasser am Ausgang des zweiten Reaktors (20) repräsentativen Größe, und
• eine dritte Regelschleife, konfiguriert zum Modifizieren einer Sauerstoffmenge (Qair) des ersten Reaktors (18), um eine Abweichung zwischen der für die Stickstoffkonzentration im Wasser am Ausgang des zweiten Reaktors (20) repräsentativen Größe und einer Sollgröße (44), die für die Stickstoffkonzentration im Wasser am Ausgang des zweiten Reaktors (20) repräsentativ ist, zu minimieren.

**14.** Vorrichtung nach einem der Ansprüche 8 bis 13, **dadurch gekennzeichnet, dass** sie ferner Mittel zum Setzen der eingebrachten Sauerstoffmenge (50) im ersten Reaktor (18) auf einen gegebenen Initialisierungswert in Abhängigkeit von einer oder mehreren Messungen oder Bestimmungen umfasst, durchgeführt von mindestens einem von:

• einem Sensor (52) für den Durchfluss von dem ersten Reaktor (18) zugeführtem Abwasser (10),
• einem Sensor oder Analysator (54) für den chemischen Sauerstoffbedarf oder den gesamten organischen Kohlenstoff in dem dem ersten Reaktor (18) zugeführten Abwasser (10),
• einem Sensor für gelösten Sauerstoff (56) im Wasser des ersten Reaktors (18),
• den Mitteln zur Bestimmung einer für ein Verhältnis (C/N) zwischen einer Kohlenstoffkonzentration und einer Stickstoffkonzentration im Wasser am Ausgang des ersten Reaktors (18) repräsentativen Größe.

**15.** Vorrichtung nach einem der Ansprüche 8 bis 14, **dadurch gekennzeichnet, dass** die Mittel zur Sauerstoffzufuhr (24) zum ersten Reaktor (18) Mittel zur Luftzufuhr umfassen.

## Claims

**1.** Method for wastewater treatment comprising:

• a first step (A) of processing carbon contained in the wastewater (10) by means of oxygen, which is carried out in a first reactor (18),
• a second step (B) of eliminating nitrogen contained in the treated water (14) in the form of gaseous nitrogen, which is different from the first step (A) and is carried out at the end of the first step (A) in a second reactor (20) which is different from the first reactor (18),

**characterised in that** it further comprises:

• a third step (26) of determining a magnitude which is representative of a ratio (C/N) between a concentration of carbon and a concentration of nitrogen in the water (14) between the first step (A) and the second step (B),
• a fourth step (28) of controlling the supply of oxygen required in the first step (A) in order to minimise a deviation between the determination carried out in the third step (26) and a setpoint (30) which is representative of the ratio of concentrations and which is strictly positive.

2. Method according to claim 1, **characterised in that** during the fourth step (28) a quantity of oxygen supplying the first reactor (18) increases when the magnitude which is representative of a concentration ratio determined in the third step (26) is greater than the setpoint (30) which is representative of the concentration ratio.

3. Method according to either claim 1 or 2, **characterised in that**, for the representative magnitude, the concentration of carbon expressed in mg/l originates from a measurement of the chemical oxygen demand (COD) and the concentration of nitrogen, expressed in mg/l, is a concentration of N-NH$_4^+$, and **in that** the setpoint (30) which is representative of the concentration ratio is between 1 and 10.

4. Method according to any one of claims 1 to 3, **characterised in that** it further comprises:

   • a fifth step (36) of determining a magnitude which is representative of the concentration of nitrogen in the water (16) at the end of the second step (B).
   • a sixth step (38) of modifying the setpoint (30) which is representative of the concentration ratio in order to minimise a deviation between the determination carried out in the fifth step (36) and a setpoint (44) which is representative of the concentration of nitrogen in the water at the end of the second step (B).

5. Method according to any one of claims 1 to 3, **characterised in that** it further comprises:

   • a fifth step (36) of determining a magnitude which is representative of the concentration of nitrogen in the water (16) at the end of the second step (B),
   • a seventh step (70) of controlling the supply of oxygen required for the first step (A) in order to minimise a deviation between the determination carried out in the fifth step (36) and a setpoint (44) which is representative of the concentration of nitrogen in the water at the end of the second step (B).

6. Method according to any one of claims 1 to 5, **characterised in that** it further comprises an eighth step (50) of setting the supply of oxygen used during the first step (A) to a given initialisation value, in accordance with one or more variables, including at least one from:

   • a measurement of the flow rate of wastewater (10) supplying the first step (A),
   • a measurement of the chemical oxygen demand (COD) or total organic carbon (TOC) in the wastewater (10) supplying the first step (A),
   • a measurement of dissolved oxygen (DO) in the water during the first step (A),
   • the magnitude which is representative of the concentration ratio determined in the third step (26).

7. Method according to any one of claims 1 to 6, **characterised in that** it further comprises a ninth step (62) which defines a lower limit of the quantity of oxygen (Qair) used during the first step (A), the lower limit being a function of a measurement of dissolved oxygen (DO) in the water during the first step (A).

8. Wastewater treatment device comprising:

   • a first reactor (18) for treating carbon supplied with wastewater (10),
   • means (24) for supplying oxygen to the first reactor (18), the oxygen serving in particular to process the carbon in the first reactor (18),
   • a second reactor (20) for eliminating nitrogen contained in the treated water in the form of gaseous nitrogen, removing the water at the outlet of the first reactor (18), the second reactor (20) being different from the first reactor (18),

   **characterised in that** it further comprises:

   • means for determining a magnitude which is representative of a ratio (C/N) between a concentration of carbon and a concentration of nitrogen in the water between the first reactor (18) and the second reactor (20),
   • a first control loop (30, 32, 34) which is configured to modify a quantity of oxygen (Qair) introduced into the first reactor (18) via the oxygen supply means (24) of the first reactor (18) in order to minimise a deviation between, on the one hand, the representative magnitude originating from the determination means and, on the other hand, a setpoint (30) which is representative of the concentration ratio and which is strictly positive.

9. Device according to claim 8, **characterised in that** it comprises means for adjusting the setpoint (30) which is representative of the concentration ratio.

10. Device according to either claim 8 or claim 9, **characterised in that** the means for determining a magnitude which is representative of a concentration ratio comprise at least one sensor and/or an analyser which enables a chemical oxygen demand (17) and an ammonium concentration (19) to be determined.

11. Device according to any one of claims 8 to 10, **characterised in that** it further comprises:

   • a sensor (56) for measuring dissolved oxygen in the first reactor (18) and
   • means for varying a lower limit for oxygen quantity supplied to the first reactor (18) in accordance with a measurement carried out by the sensor (56) for measuring dissolved oxygen in the first reactor (18).

12. Device according to any one of claims 8 to 11, **characterised in that** it further comprises:

   • means for determining a magnitude which is representative of the concentration of nitrogen (37) in the water (16) at the outlet of the second reactor (20), and
   • a second control loop (37, 40, 42, 44) which is configured to modify the setpoint (30) which is representative of the concentration ratio in order to minimise a deviation between the magnitude which is representative of the concentration of nitrogen in the water (16) at the outlet of the second reactor (20) and a setpoint (44) with a magnitude which is representative of the concentration of nitrogen in the water at the outlet of the second reactor (20).

13. Device according to any one of claims 8 to 11, **characterised in that** it further comprises:

   • means for determining a magnitude which is representative of the concentration of nitrogen in the water at the outlet of the second reactor (20), and
   • a third control loop which is configured to modify a quantity of oxygen (Qair) of the first reactor (18) in order to minimise a deviation between the magnitude which is representative of the concentration of nitrogen in the water at the outlet of the second reactor (20) and a setpoint (44) which is representative of the concentration of nitrogen in the water at the outlet of the second reactor (20).

14. Device according to any one of claims 8 to 13, **characterised in that** it further comprises means (50) for setting the quantity of oxygen supplied to the first reactor (18) to a given initialisation value in accordance with one or more measurements or determinations carried out by at least one from:

   • a flow rate sensor (52) of wastewater (10) which supplies the first reactor (18),
   • a sensor or an analyser of the chemical oxygen demand (54) or total organic carbon in the wastewater (10) which supplies the first reactor (18),
   • a sensor (56) for dissolved oxygen in the water of the first reactor (18),
   • the means for determining a magnitude which is representative of a ratio (C/N) between a concentration of carbon and a concentration of nitrogen in the water at the outlet of the first reactor (18).

15. Device according to any one of claims 8 to 14, **characterised in that** the oxygen supply means (24) of the first reactor (18) comprise air supply means.

FIG.1

EP 3 601 169 B1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0925258 B1
- FR 2400489 A1
- US 20150266759 A1
- EP 1144318 A1